Europäisches Patentamt

European Patent Office

Office européen des brevets

(11) Publication number: **0 074 788**
**B1**

# EUROPEAN PATENT SPECIFICATION

(45) Date of publication of patent specification: 31.05.89

(21) Application number: 82304704.8

(22) Date of filing: 08.09.82

(60) Divisional application 85202092 filed on 17.12.85.

(51) Int. Cl.⁴: **G 01 D 5/26,** G 01 D 5/32, G 01 K 11/12

(54) Fiber coupler temperature tranducer.

(30) Priority: 10.09.81 US 300954
10.09.81 US 300956

(43) Date of publication of application:
23.03.83 Bulletin 83/12

(45) Publication of the grant of the patent:
31.05.89 Bulletin 89/22

(84) Designated Contracting States:
AT BE CH DE FR GB IT LI LU NL SE

(56) References cited:
EP-A-0 038 023
WO-A-81/00618
DE-A-2 853 800
US-A-3 922 550
US-A-4 151 747
US-A-4 201 446
US-A-4 275 295

PATENTS ABSTRACTS OF JAPAN, vol. 2, no.
125, 20th October 1978, page 7467 E 78 & JP A
53 91 752 (NIPPON DENSHIN DENWA KOSHA)
(11-08-1979)

(73) Proprietor: THE BOARD OF TRUSTEES OF THE
LELAND STANFORD JUNIOR UNIVERSITY
Office of Technology and Licensing 105 Encina
Hall Stanford University
Stanford California 94305 (US)

(72) Inventor: Shaw, Herbert John
719 Alvarado Row
Stanford California 94305 (US)
Inventor: Digonnet, Michel J. F.
1070 Cloud Avenue
Menlo Park California 94025 (US)

(74) Representative: Rushton, Ronald et al
SOMMERVILLE & RUSHTON 11 Holywell Hill
St. Albans Hertfordshire AL1 1EZ (GB)

(56) References cited:
APPLIED OPTICS, vol. 20, no. 2, 15th January
1981, pages 167-168, New York (USA). N.
LAGAKOS et al.: "Multimode optical fiber
displacement sensor"

PATENTS ABSTRACTS OF JAPAN, vol. 3, no.
139, 17th November 1979, page 154 E 152 & JP
A 54 118 255 (MATSUSHITA DENKI SANGYO
K.K.) (13-09-1979)

(56) References cited:
**ELECTRONICS LETTERS, vol. 16, no. 7, 27th March 1980, pages 260-261, Hitchin, Herts (GB). R.A. BERGH et al.: "Single-mode fibre optic directional coupler"**

## Description

Background of the invention

The invention relates to temperature sensors used for the accurate measurement of temperature, particularly in hostile environments. The application relates to the measurement of temperature with high resolution over a predetermined dynamic range.

The most commonly used temperature sensors of the prior art which provide an electrical signal output are thermocouples. Such devices are constructed by joining two pieces of different metals, often in the shape of thin wires, at a junction located in the environment whose temperatures are to be measured. Temperature changes at this junction modify the electrical potential of each of the metals; and, since the metals react differently, a potential difference is generated between the two metals at the junction. Such thermocouples provide a high degree of temperature sensitivity, providing as much as 60 millivolts of signal increase per degree Celsius of temperature change. These thermocouples can be directly connected to analog or digital gauges to provide an accurate, repeatable measurement of temperature at the thermocouple junction.

Calibration tables exist for all common metal pairs, such as chromel-constantan or iron-constantan. Additionally, such thermocouples operate over broad temperature ranges from as low as −150 degrees Celsius to as high as 2,500 degrees Celsius with relatively small error (sometimes as low as 0.5% over the entire temperature range). Because thermocouples have low thermal mass, they reach equilibrium with their environment very rapidly, especially when they are constructed to be extremely thin. Response times as low as 1 millisecond are known. While thermocouples can be protected to withstand hostile chemical environments, they are susceptible to induced errors from electromagnetic interference. In addition, unless well protected by shielding which would necessarily increase the thermal mass and the response time of the thermocouple, these devices may be sensitive to some corrosive environments.

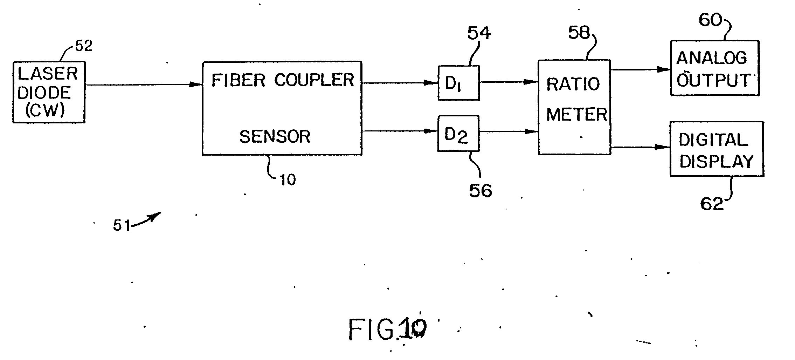

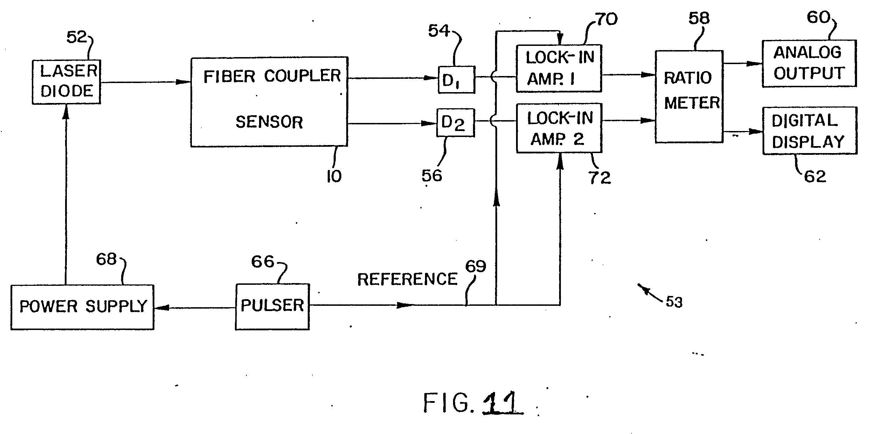

Another approach for temperature measurement is suggested by U.S. Patent No. 4,151,747 issued May 1, 1979 to Gottlieb, et al. In one embodiment, Gottlieb suggests monitoring temperature by using a single multimode optical fiber as the sensor. Gottlieb's multimode fiber is designed such that as the temperature changes the refractive index between the core and cladding also changes. This change between the refractive index of the core and cladding results in sequential stripping of the higher order modes that are being conducted by the fiber. This temperature sensitive stripping changes the amount of light in the fiber, and thus by detecting the light propagating through the fiber, an indication of the temperature changes may be obtained. Another embodiment disclosed by Gottlieb (see Figures 9A, 9B, and 10) uses temperature dependent changes in the evanescent field coupling between two fiber cores to measure temperature. The respective cores of the fibers shown in Figures 9A, 9B, and 10 of Gottlieb are spaced closely enough so that some of the light passing through one of the cores will be coupled to the other core. The relative indices of the cladding and the cores as well as the material used for both the claddings and the cores are designed by Gottlieb to vary as a result of changes in temperature. These variations result in varying of the coupling between the two cores. By monitoring the variation in coupling, this dual core fibre can be used as a temperature sensor.

For each of the disclosed embodiments, Gottlieb requires specially made fibers. For this reason, different fibers must be used where different temperature sensing characteristics are desired.

Summary of the invention

In one aspect of the invention, a temperature measuring transducer first and second single mode optical fibers each having a portion of the cladding removed from the side thereof to provide a coupling surface on each fiber, said first and second optical fibers mounted to position said first and second fibers side-by-side to juxtapose said coupling surfaces to form an evanescent fiber optic coupler, said first and second fibers curving away from each other on both sides of the coupling surfaces, characterised by:

a layer of material interposed between said coupling surface of said first fiber and said coupling surface of said second fiber in said coupler,

said interposed material being selected to have an index of refraction which varies with temperature, relative to the cladding refractive index, over the range of temperatures for which measurement of temperature is desired, to provide a coupling between said first and second fibers, said coupling changing with temperature, said fibers being single mode over said range of temperatures; and

apparatus determining the temperature including apparatus measuring the coupling efficiency of said coupler and calibrated to provide direct temperature measurement in appropriate measurement units such as Celsius or Farenheit.

An evanescent fiber optic coupler of the form utilised in the present invention is disclosed for example in Electronics Letters, Volume 16, No. 7 for the 27 March 1980 at pages 260 and 261.

In another aspect of the invention, a method of measuring temperature is provided including the steps of removing a portion of the cladding from the side of each of first and second single-mode optical fibers to provide a coupling surface on each fiber; mounting the first and second optical fibers to form an evanescent fiber optic coupler by positioning said first and second fibers side-by-side and juxtaposing said coupling surfaces, a portion of said first fiber adjacent one side of said coupling surface and the first and second fibers curve away from each other on both sides of the coupling surfaces, characterized by selecting a temperature-responsive material having an index of refraction which changes relative to the claddings of said fibers in response to temperature changes over the range of temperatures for which measurement of temperature is desired to provide a coupling between the first and second fibers wherein the coupling changes with temperature, the fibers being single-mode throughout the range of temperatures; interposing said temperature-responsive material between said coupling surfaces of the optical fibers; and measuring the coupling efficiency of the evanescent fiber optic coupler to determine the temperature.

The present invention is best understood through reference to to the drawings, in which:

Figure 1 is a cross-sectional view of the fiber optic coupler used in the present invention;

Figure 2 is a cross-sectional view of the coupler of Figure 1, taken along line 2—2;

Figure 3 is a cross-sectional view of the coupler of Figure 1, taken along line 3—3;

Figure 4 is a perspective view of one element of the coupler of Figure 1, separated from the other element thereof to show the configuration of the confronting face of said element;

Figure 5 is a perspective view showing a first structure for rigidly interconnecting the bases of substrates of the coupler of Figure 1 for use in temperature measurement;

Figure 6 is a perspective view showing one base or substrate of the coupler of Figure 1, incorporating a dam for precisely separating the coupler substrates in a temperature measuring coupler;

Figure 7 is a chart showing the relationship between temperature in degrees Celsius and coupling efficiency for a particular coupler used for temperature measurement;

Figure 8 is perspective view showing a first fiber optic arrangement for permitting the input and output fibers to exit from the coupler exclusively on one side and thus permitting the coupler to measure temperatures at the distal end for the fiber optic connections;

Figure 9 is a schematic representation showing the use of an optical isolator and a secondary fiber optic coupler to permit temperature measurements using a fiber optic coupler having fiber elements exiting exclusively from one end of the primary coupler and thus providing temperature measurement at the distal end of the fiber optic elements;

Figure 10 is a schematic diagram of an electrical circuit used for measuring the coupling efficiency of the coupler; and

Figure 11 is a schematic block diagram of an alternative electrical system for use in place of the electrical circuit of Figure 10.

Detailed description of the preferred embodiment

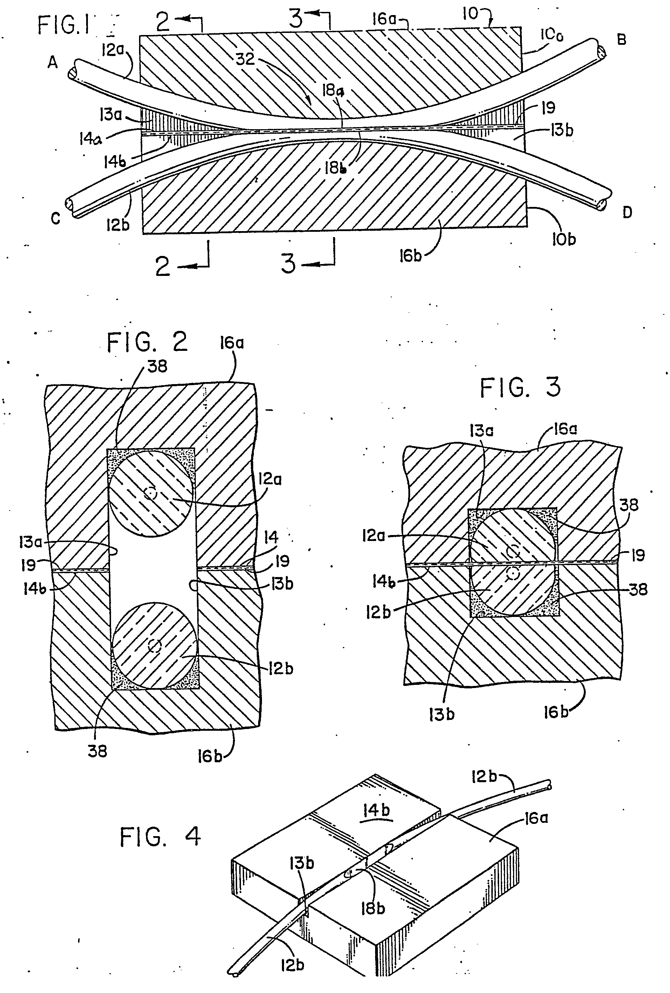

Referring initially to Figures 1 through 4, a fiber optic coupler is shown which provides the transducing element of the temperature transducer of the present invention.

The coupler 10 includes two strands, 12a and 12b, of a single mode fiber optic material mounted in longitudinal arcuate grooves 13a and 13b, respectively, formed in optically flat confronting surfaces 14a and 14b, respectively, of rectangular bases or substrates 16a and 16b, respectively.

Each of the strands 12a and 12b comprises a commercially available fiber of quartz glass which is doped to have a central core and an outer cladding. The applicant has found that the present invention works effectively with single mode fibers, which typically have a core diameter in the order of 10 microns or less and a cladding diameter on the order of 125 microns.

The arcuate grooves 13a and 13b have a radius of curvature which is very large compared to the diameters of the strands 12a and 12b. Thus the fiber optic strands 12a and 12b, when mounted in the grooves 13a and 13b, respectively, gradually converge toward the center and diverge toward the edges of the substrates 16a and 16b. At the centers of the substrates 16a and 16b the depth of the grooves 13a and 13b which mount strands 12a and 12b, respectively is less than the diameter of the strands 12a and 12b. At the edges of the substrates 16a and 16b, the depth of the grooves 13a and 13b is preferably at least as great as the diameter of the strands 12a and 12b. Fiber optic material is removed from each of the strands 12a and 12b to form oval shaped, planar surfaces 18a and 18b, which are co-planar with the confronting surfaces 17a and 17b, respectively, of the substrates 16a and 16b, respectively. In the embodiment shown, the coupler halves 10a and 10b are identical and are assembled by placing the confronting surfaces 14a and 14b of the substrates 16a and 16b together so that the surfaces 18a and 18b of the strands 12a and 12b are in facing relationship. An index matching substance 19, such as index matching oil, is provided between the confronting surfaces 14a and 14b. The index matching substance has a refractive index approximately equal to the refractive index of the cladding and also functions to prevent the optically flat surfaces 14a and 14b from becoming permanently locked together. It is the temperature sensitivity of this oil (the changes in its refractive index with temperature) which permits the coupler 10 to measure the temperature.

An interaction region 32 is formed at the junction of the strands 12a and 12b. In the interaction region 32, light is transferred between the strands 12a and 12b by evanescent field coupling. When the spacing between the cores of the strands 12a and 12b is within a critical zone, each strand receives a significant portion of the evanescent field energy from the other strand; and optimum coupling is achieved without significant energy loss. For a single mode fiber having a step index gradient, the critical zone can be quite narrow. In a single mode fiber of the type shown in Figures 1 through 4, for example, the required center-to-center spacing between the strands 12a and 12b at the center of coupler is typically less than a few (for example, 2—3) core diameters.

Preferably the strands 12a and 12b are symmetrical through the interaction region 32 in the plane of the facing surfaces 18a and 18b so that the facing surfaces 18a and 18b are coextensive if superimposed.

The coupler 10 includes four ports labelled A, B, C and D in Figure 1. If it is assumed that input light of a suitable wavelength, for example, 1.15 microns, is applied to port A, this light passes through the coupler 10 and is output at either one or both of port B and port D, depending on the amount of power that is coupled between the strands 12a and 12b. In this regard, the term "normalized coupler power" is defined as the power ratio of the coupled power to the total output power. In the above example, the normalized coupled power would be equal to the ratio of the power at port D to the sum of the power output at ports B and D. This ratio is also referred to as the "coupling efficiency" and when so used is typically expressed as a percent. Thus, when the term "normalized coupled power" is used herein, it should be understood that the corresponding coupling efficiency is equal to the normalized coupled power times 100.

The coupler 10 operates on evanescent field coupling principles in which guided modes of the strands 12a and 12b interact through their evanescent fields to cause light to be transferred between the strands 12a and 12b. As previously indicated, the transfer of light between the strands 12a and 12b occurs at the interaction region 32. The amount of light transferred is dependent upon the proximity and orientation of the cores of the strands 12a and 12b as well as the effective length of the interaction region 32. If the length of the interaction region 32 and the separation of the strands 12a and 12b within this region 32 are properly selected, light within the coupler 10 will make only one transfer between the strands 12a and 12b as it travels through the interaction region 32. If the coupler 10 is properly constructed, it is possible under such conditions to couple 100% of the light input at port A to port D. If the length of the interaction region 32 is further increased, or the separation between the strands 12a and 12b further reduced, a phenomenon referred to herein as overcoupling will occur in which the light will transfer back to the strand from which it originated. Several orders of overcoupling are possible. Thus, as the interaction length is still further increased or the separation is still further reduced, the light will make several transfers between the strands 12a and 12b. Thus, the light may make multiple transfers back and forth between the two strands 12a and 12b as it travels through the region 32, the number of such transfers being dependent on the length of interaction region 32 and the spacing of the strands 12a and 12b within this region.

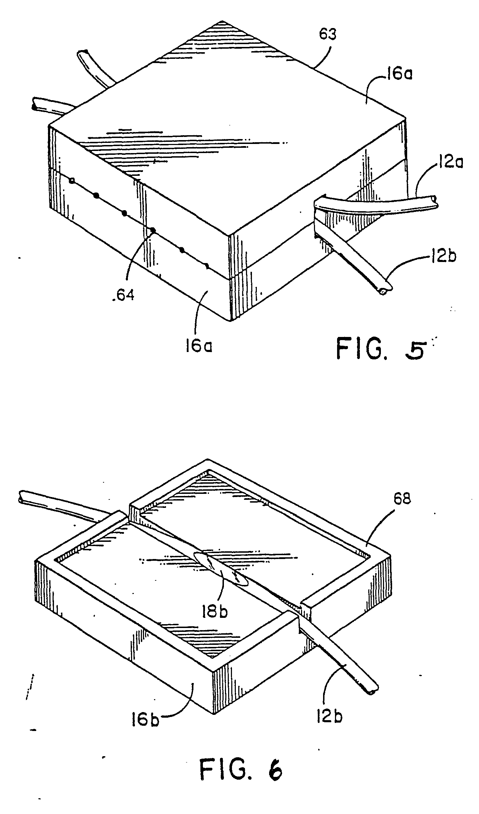

In order to utilize the coupler described above for temperature measurements, it is necessary for substrates 16A and 16B be aligned or tuned to provide a coupling efficiency which is approximately midway along a relatively linear portion of a curve of coupling efficiency versus core spacing. This will increase the linearity of the temperature measurement. Once the coupler 10 has been tuned to this preferred fiber spacing, the technique shown in Figure 5 may be utilized. As shown in that figure, the upper substrate 16a and lower substrate 16b may be welded along their outside edges using a low melting temperature glass 64 to prevent shifting of the substrates 16a and 16b. Since the sizes of the substrates 16a and 16b should be reduced to the greatest extent possible to lower the thermal mass of the temperature sensor 63, the substrates 16a and 16b may be clamped together in the preferred orientation and the edges ground to the smallest practical dimension prior to application of the welding glass 64. Prior to this welding operation, the substrates 16a and 16b should be separated from one another by a layer of index matching oil.

In the embodiment shown in Figure 6, a thicker layer of index matching oil of uniform cross-section may be applied between the substrates 16a and 16b by providing, on the substrate 16b, a thin dam 68 which surrounds the face of the substrate 16b which abuts against the substrate 16a. This dam 68 will hold the index matching oil near the coupling region and will additionally provide a bonding area for attaching the two substrates 16a and 16b together. The dam 68 should be deposited on the substrate 16b after the substrates 16a and 16b have been ground to the smallest size possible. Fabrication of the dam 68 can be easily achieved using standard vacuum deposition techniques which provide accurate, low-thickness films as thin as 10 angstroms. A preferable thickness for the dam 68 is approximately 1 micron. Once the dam 68 has been deposited, molecular bonding may be used enhanced by ultrasonic waves, to attach the dam 68, and thus the substrate 16b to the face of the substrate 16a after temperature sensor 63 has been accurately tuned. Alternatively, a thin bonding agent may be used between the dam 68 and the substrate 16a.

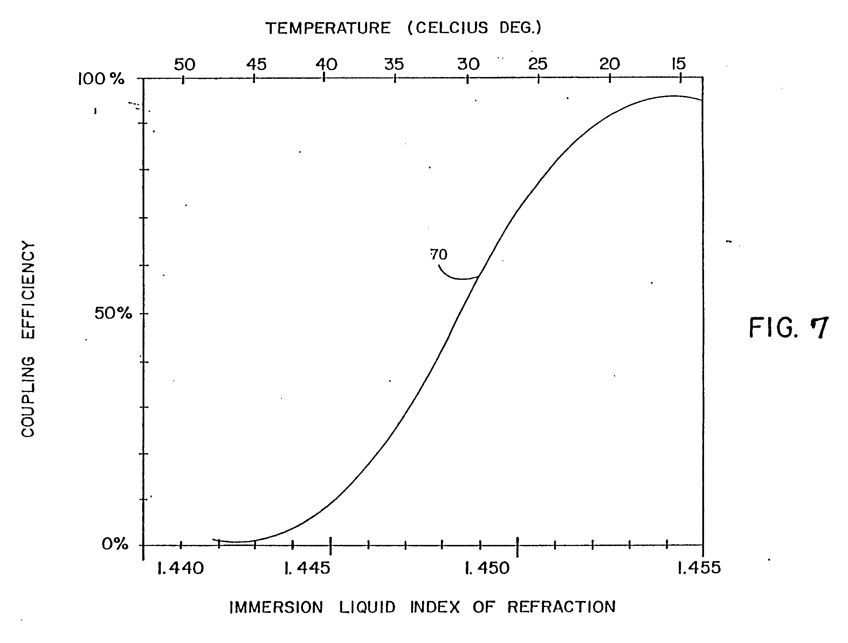

The curve 70 of Figure 7 graphically illustrates the effect of temperature on the index of refraction of a typical index matching oil which is placed between the substrate 16a and 16b. Curve 70 also shows the relationship between temperature in degrees Celsius and the index of refraction and, in turn, the relationship between temperature and coupling efficiency.

As can be seen from the exemplary curve 70, a typical index matching oil can provide relatively linear changes in coupling efficiency between temperatures of approximately 20 degrees and 43 degrees Celsius. By selecting oils having different characteristic refractive indices with temperature, temperatures within different ranges may be measured; and different resolution measurements of temperature may be achieved.

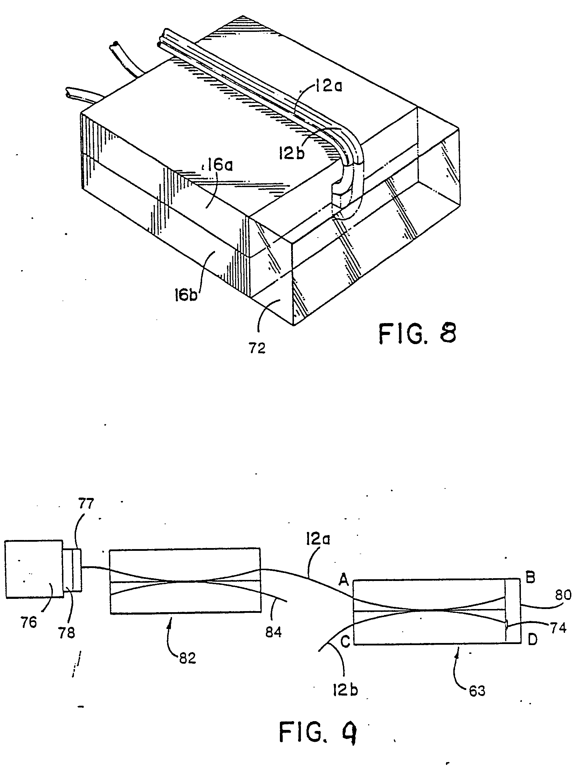

A temperature sensor 63 may be used in the configuration shown in Figure 1, with the input light being supplied to port A of the coupler 10 and the output light at ports B and D being measured to determine coupling efficiency for the temperature sensor 63 if the environment whose temperatures are to be measured can conveniently be placed between the light source 52 and the photo detectors 54, 56. Since this is often not the case, the arrangement of Figure 8 may be utilized to permit the light source 52 and photo detectors 54, 56 all to be mounted exclusively on one side of the temperature sensor 63 and to thus allow the temperature sensor 63 to be inserted into a thermal environment to be measured at the distal end of the optical fibers 12a and 12b. In the arrangement shown in Figure 8, the optical fibers 12a and 12b exiting the temperature sensor 63 at ports B and D may be looped over the upper substrate 16a and bonded to the upper surface of the substrate 16a by any suitable bonding agent. In this configuration, it is advisable to melt low temperature glass 72 onto the end of the temperature sensor 63 to encapsulate and protect the looped portion of the fibers 12a and 12b.

An alternative arrangement for providing the temperature sensor 63 at the distal end of the optical fiber interconnections is shown in Figure 9. In this configuration, the fibers 12a and 12b are cut flush with the end of the temperature sensor 63 at the ports B and D (Figure 1). A mirror 74 is placed against the end of the fiber 12a at port D to reflect all of the coupled branch power toward the temperature sensor 63. The temperature-dependent optical signal may then be detected at the second input side fiber 12b at port C, which thus becomes an output channel. The signal magnitude, $P_0$, is proportional to $P_1$ (E) (1−E) where E is the temperature-dependent coupling efficiency of the fiber coupler 10.

When using the configuration shown in Figure 9, it is necessary to protect the laser diode 76 from power reflected by the mirror 74 and coupled back to the fiber strand 12a. This protection is accomplished by an optical isolator which prevents such reflected power from introducing laser output fluctuations. Such optical isolation is accomplished, for example, by using a quarter wave plate 77 combined with a polarizer 78 in a well-known manner.

The mirror 74 may be simply deposited on the polished end surface of the temperature sensor 73 where the output fiber 12b has been cut. A metallic type of mirror is preferable to a dielectric, multi-layered type mirror whose reflection coefficient is also temperature sensitive. A layer of glass 80 may be vacuum deposited on the top of the mirror 74 to provide extra mechanical protection.

In this arrangement, a second optical coupler 82 is utilized along the input fiber 12a to normalize out any laser output or launching efficiency variations. Output from the coupled strand 84 of this coupler 82 is used as a reference for measuring the ratio of coupling efficiency.

Referring now to Figure 10, an electrical system 51 is shown for measuring the ratio of light output of ports B and D (Figure 1) to provide a measurement of coupling efficiency and to thus generate an electrical signal which is proportional to temperature. In the arrangement shown in Figure 10, a laser diode 52 provides a continuous wave signal to the fiber optic coupler 10 and specifically to port A (Figure 1). The outputs from ports B and D are connected, respectively, to a pair of detectors 54 and 56, each of which provides an output electrical signal proportional to the light intensity at ports B and D, respectively. The electrical signals output from the detectors 54, 56 are supplied to a ratio meter 58, which provides a direct measurement of the ratio between the output light at port D and the output light at both ports B and D. This output is supplied as an analog output 60 for operating other equipment (not shown) and as a digital display 62 for providing a direct display of temperature. It will be understood that the analog output 60 and digital display 62 may include scaling factors or constants selected to provide direct temperature measurement in appropriate measurement units, such as Celsius or Farenheit. The ratiometer 58, along with the analog and digital outputs 60 and 62, respectively, is a readily available electronic device well known in the prior art.

Figure 11 provides a more accurate electronic system 53 for measuring the output signals from detectors 54 and 56, and thus the temperature. In this example, a laser diode 52 supplies light to port A of the fiber optic coupler 10; and the outputs at ports B and D are monitored by detectors 54 and 56 as in Figure 8. However, the laser diode 52 does not supply continuous light as in Figure 8, but rather, provides a pulsed light output, which is induced by a pulse generator 66 controlling a diode power supply 68. In a preferred exemplary embodiment, the pulse generator 66 may provide square wave pulses at a frequency of 2 kHz so that the output from the laser diode 52 is modulated at a 2 kHz rate.

The output from the pulse generator 66 is supplied, in addition, as a reference on line 69 to a pair of lock-in amplifiers 70 and 72, which are connected to the output of the detectors 54 and 56, respectively. The reference input 68 to the amplifiers 70, 72 provides a timing signal for enabling these amplifiers 70, 72. The amplifiers 70, 72 are well known in the prior art and each provides a signal proportional to the average peak value of the output from the detectors 54, 56, respectively. Thus, by using the reference signal on line 69, the lock-in amplifiers 70, 72 will measure the peak output level from the detectors 54, 56 and will average this peak level over a predetermined number of cycles of the pulse generator 66. This number of cycles is adjustable on each of the amplifiers 70, 72.

The output from the amplifiers 70, 72 is supplied to a ratio meter 58 as described in reference to Figure 8 to provide an analog output 60 and digital display 62 corresponding to the temperature of the coupler 10.

By selecting the integration time of the lock-in amplifiers 70, 72, that is, the number of cycles of pulse generator 66 which are averaged by each of the amplifiers 70, 72, the band width of the measurement may be adjusted. For example, an integration time of 1 second corresponds to a measurement bandwidth of 2 kHz centered about the pulse generator 76 frequency. This reduced bandwidth substantially reduces the noise signal contribution in the output to the ratio meter 58, and thereby increases the accuracy of the measurements while reducing the minimum time period between successive measurements to, in this particular example, one second. That is, measurements are available only at a one-second repetition rate. Thus, by properly adjusting both amplifiers 70, 72 to an integration time which provides only the required measurement repetition rate, the noise bandwidth may be substantially reduced, and the signal-to-noise ratio significantly increased, increasing the accuracy of the measurement. An operator may thus select a proper tradeoff between measurement accuracy and repetition rate to fit the requirements of a particular measurement.

It has been found that by increasing the thickness of the layer of index matching oil between the substrates 16a and 16b (Figure 1), the sensitivity of the temperature sensor 63 and temperature changes may be increased. This sensitivity can be further improved by polishing the substrates 16a, 16b closer to the cores of the fibers 12a, 12b and increasing the liquid layer thickness. Reducing the size of the substrates 16a, 16b, for example, to approximately five by five by ten millimeters yields a fairly low thermal mass and thus reduced response times. Adequate interconnection of the substrates 16a and 16b, as by welding, is important so that the physical size of the oil layer between the substrates 16a, 16b does not change the temperature. Furthermore, the substrate 16a should be constructed from material, such as quartz, which has a thermal expansion coefficient similar to that of the optical fibers 12a and 12b to avoid damage to the optical fibers 12a and 12b with temperature changes.

The temperature sensor 63 provides repeatable, accurate temperature measurements typically in a range from approximately 0 degrees C to 50 degrees C, depending upon the index matching liquid used. A sensitivity as high as 400 millivolts per degree Celsius is achievable, and resolutions providing minimum detectable temperature changes of 0.001 degree Celsius may be realized. The temperature sensor 63 is insensitive to hostile electromagnetic environments and may thus be utilized in locations where other temperature measuring devices are not practical.

## Claims

1. A temperature measuring transducer including first and second single mode optical fibers (12a, 12b), each having a portion of the cladding removed from the side thereof to provide a coupling surface (18a, 18b) on each fiber, said first and second optical fibers (12a, 12b) mounted to position said first and second fibers side-by-side to juxtapose said coupling surfaces to form an evanescent fiber optic coupler (10), said first and second fibers curving away from each other on both sides of the coupling surfaces, characterised by:

a layer of material (19) interposed between said coupling surface (18a) of said first fiber and said coupling surface (18b) of said second fiber in said coupler, .

said interposed material being selected to have an index of refraction which varies with temperature, relative to the cladding refractive index, over the range of temperatures for which measurement of temperature is desired, to provide a coupling between said first and second fibers, said coupling changing with temperature, said fibers being single mode over said range of temperatures; and

apparatus (54, 56, 58, 60, 62) determining the temperature including apparatus measuring the coupling efficiency of said coupler and calibrated to provide direct temperature measurement in appropriate measurement units, such as Celsius or Farenheit.

2. A transducer, as defined in Claim 1, said transducer further characterized by:

a light source (52) positioned to illuminate one of said first and second fibers in said coupler; and

a detector (54, 56) positioned to detect the illumination from said one of said first and second fibers.

3. A transducer, as defined in Claim 2, said transducer further characterized by:

a ratiometer (58) for providing an output signal in accordance with said detecting means.

4. A transducer, as defined in Claim 2, said transducer characterized by:

apparatus (60, 62) displaying the output of said ratiometer and scaling the output into the desired temperature units.

5. A transducer as defined in Claim 3, further characterized in that said detector includes first and second detectors for detecting light from said first and second fibers respectively.

6. A transducer according to Claim 5 further characterized by:

a first lock-in amplifier (70) connected between the ratiometer (58) and the first detector (54) to provide the ratiometer a signal proportional to the average peak value of the light intensity incident upon the first detector;

a second lock-in amplifier (72) connected between the ratiometer (58) and the second detector (56) to provide to the ratiometer a signal proportional to the average peak value of the light intensity incident upon the second detector; and

a pulse generator (66) connected to the first lock-in amplifier and to the second lock-in amplifier to control the time during which the first and second lock-in amplifiers average the output of the first and second detector to control the bandwidth of the signal output of the ratiometer.

7. A transducer according to Claim 1 further characterized by:

a laser (76) for providing a light input to the first fiber (12a);

a mirror (74) positioned to reflect light output by the second fiber (12b) back into the second fiber;

a fiber optic coupler (82) interposed between the laser and the first fiber; and

an optical isolator (77, 78) interposed between the laser and the fiber optic coupler.

8. A temperature transducer, as defined in Claim 1, characterized in that the apparatus for mounting said first and second fibers comprises a first block (16a) having a groove for mounting said first fiber, a second block (16b) having a groove for mounting said second fiber, a dam (68) surrounding the grooved face of said second block, said grooves and fibers arranged in face-to-face relationship, separated by a distance determined by said dam.

9. A temperature transducer, as defined in Claim 8, characterized in that said blocks are welded together.

10. A temperature transducer, as defined in Claim 2, characterized in that said detector is located on the same side of said mounting means as said light source.

11. A temperature transducer, as defined in Claim 1 or 8, characterized in that said first and second optical fibers are looped around the apparatus for mounting said fibers to exit exclusively from one side of the mounting apparatus.

12. A temperature transducer as defined in Claim 1 said measuring apparatus further characterized by:

a mirror (74) for reflecting the illumination at said second fiber back into said second fiber;

a fiber optic coupler (82) interposed between said illuminated means and said first fiber; and

an optical isolator (77, 78) interposed between said illuminating means and said fiber optic coupler.

13. A method of measuring temperature, including removing a portion of the cladding from the side of each of first and second single mode optical fibers (12a, 12b) to provide a coupling surface (18a, 18b) on each fiber; mounting said first and second optical fibers to form an evanescent fiber optic coupler (10) by positioning said first and second fibers side-by-side and juxtaposing said coupling surfaces, a portion of said first fiber adjacent one side of said coupling surface (18a) and said first and second fibers curving away from each other on both sides of the coupling surfaces, characterized by:

selecting a temperature responsive material (19) having an index of refraction which changes relative to the claddings of said fibers in response to temperature changes over the range of temperatures for which measurement of temperature is desired, to provide a coupling between said first and second fibers, said coupling changing with temperature, said fibers being single mode throughout said range of temperatures;

interposing said temperature responsive material between said coupling surfaces of said optical fibers; and

measuring the coupling efficiency of said evanescent fiber optic coupler to determine said temperature.

14. A method of measuring temperature, as defined in Claim 13, characterized in that said interposing step comprises providing a layer of index matching oil between said coupling surfaces.

15. A method of measuring temperature, as defined in Claim 13, characterized in that said fiber optic coupler acts to couple light between said first and second fibers at the location of said coupling surfaces intermediate the ends of said first and second fibers; and wherein said measuring step comprises illuminating one end of said first optical fiber and measuring the light output at both the other end of said first optical fiber and at the corresponding end of said second optical fiber.

16. A method of measuring temperature, as defined in Claim 15, further characterized by:

determining the ratio of said measured output of said corresponding end of said second optical fiber to the sum of said measured output at said other end of said first optical fiber and said corresponding end of said second optical fiber.

17. A method of measuring temperature, as defined in Claim 16, characterized in that said illuminating step comprises providing modulated illumination and wherein said light output measuring step comprises measuring the peak output of illumination at said other end and corresponding end of said optical fibers and integrating said peak output to reduce the bandwidth of said measuring step.

**Patentansprüche**

1. Temperaturmeß-Wandler mit ersten und zweiten optischen Einzelmodus-Fasern (12a, 12b), von denen jede einen Teil der Umhüllung von einer ihrer Seiten entfernt hat, um eine Kopplungsoberfläche (18a, 18b) auf jeder Faser zu bilden, wobei die erste und die zweite optische Faser (12a, 12b) derart montiert sind, daß die erste und die zweite Faser seitlich nebeneinander positioniert sind, um die Kopplungsoberfläche nebeneinanderzusetzen und einen optischen Faserkoppler (10) vom Dämpfungstyp zu bilden, wobei ferner die erste und die zweite Faser an beiden Seiten der Kopplungsoberflächen voneinander weg gekrümmt sind, gekennzeichnet durch

eine Schicht aus Material (19), das zwischen die Kopplungsfläche (18a) der ersten Faser und die Kopplungsfläche (18b) der zweiten Faser in dem Koppler eingefügt ist,

wobei das eingefügte Material derart gewählt ist, daß es einen Brechungsindex besitzt, der mit der Temperatur variiert, und zwar relativ zum Brechungsindex der Umhüllung, und über den Bereich von Temperaturen, für den eine Messung der Temperatur erwünscht ist, um eine Kopplung zwischen der ersten und zweiten Faser zu schaffen, wobei ferner die Kopplung sich mit der Temperatur ändert und die Fasern über den genannten Bereich von Temperaturen einen Einzelmodus aufweisen; und

eine Vorrichtung (54, 56, 58, 60, 62), welche die Temperatur bestimmt, einschließlich einer Vorrichtung, welche den Kopplungswirkungsgrad des Kopplers bestimmt und derart kalibriert ist, daß sie eine direkte Temperatur-messung in geeigneten Meßeinheiten, wie Celsius oder Fahrenheit liefert.

2. Wandler nach Anspruch 1, ferner gekennzeichnet durch:

Eine Lichtquelle (52), die derart positioniert ist, daß sie eine der ersten und zweiten Fasern in dem Koppler beleuchtet; und

einen Detektor (54, 56), der derart positioniert ist, daß er die Beleuchtung von einer der ersten und zweiten Fasern detektiert.

3. Wandler nach Anspruch 2, ferner gekennzeichnet durch:

Ein Ratiometer bzw. einen Quotientenmesser (58) zur Lieferung eines Ausgangssignals gemäß der Detektoreinrichtung.

4. Wandler nach Anspruch 2, gekennzeichnet durch:

Eine Vorrichtung (60, 62), welche den Ausgang des Ratiometers anzeigt und den Ausgang skalenmäßig in die erwünschten Temperatureinheiten teilt.

5. Wandler nach Anspruch 5, ferner dadurch gekennzeichnet, daß der Detektor erste und zweite Detektoren umfaßt, um Licht aus den ersten bzw. zweiten Fasern zu detektieren.

6. Wandler nach Anspruch 5, ferner gekennzeichnet durch:

Einen ersten Verriegelungsverstärker bzw. Einfangverstärker (70), der zwischen dem Ratiometer (58) und dem ersten Detektor (54) angeschlossen ist, um den Ratiometer ein Signal zu liefern, das dem mittleren Spitzenwert der auf den ersten Detektor einfallenden Lichtintensität proportional ist;

einen zweiten Einfangverstärker (72), der zwischen dem Ratiometer (58) und dem zweiten Detektor (56) angeschlossen ist, um dem Ratiometer ein Signal zu liefern, das dem mittleren Spitzenwert der auf den zweiten Detektor einfallenden Lichtintensität proportional ist; und

einen Impulsgenerator (66), der mit dem ersten Einfangverstärker und mit dem zweiten Einfangverstärker bzw. Verriegelungsverstärker verbunden ist, um die Zeit zu steuern, während der der erste und der zweite Einfangverstärker den Ausgang des ersten und zweiten Detektors mitteln, um die Bandbreite des Signalausgangs des Ratiometers zu steuern.

7. Wandler nach Anspruch 1, ferner gekennzeichnet durch:

Einen Laser (76) zur Lieferung eines Lichteingangs an die erste Faser (12a);

einen Spiegel (74), der zur Reflexion des Lichtausgangs von der zweiten Faser (12b) zurück in die zweite Faser positioniert ist;

einen faseroptischen Koppler (82), der zwischen den Laser und die erste Faser eingesetzt ist; und

einen optischen Isolator (77, 78), der zwischen den Laser und den optischen Faserkoppler eingefügt ist.

8. Temperaturwandler nach Anspruch 1, dadurch gekennzeichnet, daß die Vorrichtung zur Montierung der ersten und zweiten Faser einen ersten Block (16a) umfaßt, welcher eine Nut zur Montage der ersten Faser besitzt, sowie einen zweiten Block (16b) mit einer Nut zur Montage der zweiten Faser, daß ein Damm (68) die genutete Fläche des zweiten Blockes umgibt, und daß die Nuten und die Fasern in einer mit ihren Flächen einander zugewandten Beziehung angeordnet sind und in einem Abstand voneinander getrennt sind, der durch den Damm bestimmt ist.

9. Temperaturwandler nach Anspruch 8, dadurch gekennzeichnet, daß die Blöcke miteinander verschweißt sind.

10. Temperaturwandler nach Anspruch 2, dadurch gekennzeichnet, daß der Detektor auf der gleichen Seite der Montageeinrichtung wie die Lichtquelle angeordnet ist.

11. Temperaturwandler nach Anspruch 1 oder 8, dadurch gekennzeichnet, daß die erste und die zweite optische Faser um das Gerät zur Montage der Fasern herum schleifenförmig angeordnet ist, um ausschließlich von einer Seite der Montagevorrichtung her auszutreten.

12. Temperaturwandler nach Anspruch 1, wobei die Meßvorrichtung ferner gekennzeichnet ist durch:

Einen Spiegel (74) zur Reflexion der Beleuchtung an der zweiten Faser zurück in die zweite Faser;

einen faseroptischen Koppler (82), der zwischen die Beleuchtungseinrichtung und die erste Faser eingefügt ist; und

einen optischen Isolator (77, 78), der zwischen die Beleuchtungseinrichtung und den optischen Faserkoppler eingefügt ist.

13. Verfahren zur Temperaturmessung, bei dem ein Teil der Umhüllung von der Seite jeweils einer ersten und zweiten optischen Einzelmodus-Faser (12a, 12b) entfernt wird, um eine Kopplungsoberfläche (18a, 18b) auf jeder Faser zu schaffen; wobei ferner die erste und die zweite optische Faser zur Bildung eines optischen Faserkopplers vom Dämpfungstyp (10) montiert werden, und zwar durch Positionieren der ersten und zweiten Fasern seitlich nebeneinander und durch Nebeneinandersetzen der Kopplungsoberflächen, wobei ein Teil der ersten Faser benachbart einer Seite der Kopplungsoberfläche (18a) und die erste und die zweite Faser an beiden Seiten der Kopplungsoberflächen voneinander weg gekrümmt werden, gekennzeichnet durch:

Auswählen eines temperaturabhängigen Materials (19), welches einen Brechungsindex besitzt, der sich relativ zu den Umhüllungen der Fasern in Abhängigkeit von Temperaturänderungen über den Bereich von Temperaturen, für den die Messung der Temperatur erwünscht ist, ändert, um eine Kopplung zwischen der ersten und zweiten Faser zu schaffen, wobei die Kopplung sich mit der Temperatur ändert, und wobei die Fasern durch den ganzen Temperaturbereich hindurch von Einzelmodus-Typ sind;

Einfügen des temperaturabhängigen Materials zwischen die Kopplungsoberflächen der optischen Fasern; und

Messen des Kopplungswirkungsgrades des optischen Faserkopplers vom Dämpfungstyp zur Bestimmung der Temperatur.

14. Verfahren zur Temperaturmessung nach Anspruch 13, dadurch gekennzeichnet, daß der Schritt des Einfügens darin besteht, daß eine Schicht aus Indexanpassungsöl zwischen den Kopplungsoberflächen vorgesehen wird.

15. Verfahren zur Temperaturmessung nach Anspruch 13, dadurch gekennzeichnet, daß der faseroptische Koppler bewirkt, daß Licht zwischen der ersten und zweiten Faser gekoppelt wird, und zwar an der Stelle der Kopplungsoberflächen zwischen den Enden der ersten und zweiten Faser; und daß bei dem Meßverfahrensschritt ein Ende der ersten optischen Faser beleuchtet wird und der Lichtausgang an sowohl dem anderen Ende der ersten optischen Faser und am entsprechenden Ende der zweiten optischen Faser gemessen wird.

16. Verfahren zur Temperaturmessung nach Anspruch 15, ferner gekennzeichnet durch:

Bestimmung des Verhältnisses des gemessenen Ausgangs des entsprechenden Endes der zweiten optischen Faser zur Summe des gemessenen Ausgangs an dem anderen Ende der ersten optischen Faser und dem entsprechenden Ende der zweiten optischen Faser.

17. Verfahren zur Temperaturmessung nach Anspruch 16, dadurch gekennzeichnet, daß der Beleuchtungsschritt den Vorgang umfaßt, eine modulierte Beleuchtung vorzusehen, und daß der Verfahrensschritt der Messung des Lichtausgangs die Messung des Spitzenausgangs der Beleuchtung an dem anderen Ende und dem entsprechenden Ende der optischen Faser umfaßt, sowie der Integrierung des Spitzenausgangs zur Verminderung der Bandbreite des Meßverfahrensschrittes.

**Revendications**

1. Transducteur pour la mesure de la température comprenant une première et une second fibres optiques (1a, 12b), chacune de ces fibres ayant une portion du revêtement enlevé sur un côté afin de produire une surface de couplage (18a, 18b) sur chaque fibre, lesdites première et seconde fibres optiques (12a, 12b) étant montées côté à côte de façon à juxtaposer lesdites surfaces de couplage en vue de former un coupleur à fibre optique évanescent (10), lesdites première et seconde fibres s'éloignant en courbe l'une de l'autre de chaque côté des surfaces de couplage, caractérisé par:

une couche de matière (19) interposée entre ladite surface de couplage (18a) de ladite première fibre et ladite surface de couplage (18b) de ladite seconde fibre dans ledit coupleur, ladite matière interposée étant choisie de façon à avoir un indice de réfraction variant avec la température par rapport à l'indice de réfraction du revêtement, dans un domaine de températures désirable pour ladite mesure de la température, de façon à permettre un couplage entre lesdites premières et secondes fibres, ledit couplage variant avec la température, lesdites fibres étant monomodes dans ledit domaine de températures; et

un appareil (54, 56, 58, 60, 62 déterminant la température comprenant un appareil mesurant l'efficacité de couplage dudit coupleur et calibré de façon à fournir une mesure directe de la température dans des unités de mesure appropriées telles que degré Celsius ou Fahrenheit.

2. Transducteur tel qu'il est revendiqué dans la revendication 1, ledit transducteur étant caractérisé par:

une source de lumière (52) disposée de façon à illuminer l'une desdites première et seconde fibres dans ledit coupleur; et

un détecteur (54, 56) disposé de façon à détecter l'illumination provenant de ladite fibre desdites première et seconde fibres optiques.

3. Transducteur tel qu'il est revendiqué dans la revendication 2, ledit transducteur étant caractérisé par:

un ratiomètre (58) fournissant un signal de sortie en accord avec le détecteur.

4. Transducteur tel qu'il est revendiqué dans la revendication 2, ledit transducteur étant caractérisé par:

un appareil (60, 62) indiquant le signal de sortie dudit ratiomètre et visualisant le signal de sortie sur une échelle graduée selon les unités de mesure de la température désirées.

5. Transducteur tel qu'il est revendiqué dans la revendication 3, caractérisé en outre en ce que ledit détecteur comprend un premier et un second détecteur permettant de détecteur la lumière provenant desdites première et seconde fibres respectivement.

6. Transducteur tel qu'il est revendiqué dans la revendication 5, caractérisé en outre par:

un premier amplificateur à verrouillage (70) relié entre le ratiomètre (58) et le premier détecteur (54) de façon à fournir au ratiomètre un signal proportionnel à la valeur maximale moyenne de l'intensité de la lumière incidente sur le premier détecteur;

un second amplificateur à verrouillage (72) relié entre le ratiomètre (58) et le second détecteur (56) de façon à fournir au ratiomètre un signal proportionnel à la valeur maximale moyenne de l'intensité de la lumière incidente sur le second détecteur; et

un générateur à impulsions (66) relié au premier amplificateur à verrouillage et au second amplificateur à verrouillage de façon à contrôler le temps pendant lequel lesdits premier et second amplificateurs à verrouillage établissent la moyenne du signal de sortie desdits premier et second détecteurs de façon à contrôler la largeur de bande du signal de sortie du ratiomètre.

7. Transducteur tel qu'il est revendiqué dans la revendication 1, caractérisé en outre par:

un laser (76) fournissant un signal lumineux à la première fibre (12a);

un miroir (74) disposé de façon à réfléchir le signal lumineux émanant de la seconde fibre (12b) dans ladite seconde fibre (12b);

un coupleur optique à fibre (82) interposé entre le laser et ladite première fibre; et

un isolateur optique (77, 78) interposé entre le laser et le coupleur à fibre optique.

8. Transducteur à température tel qu'il est revendiqué dans la revendication 1, caractérisé en outre en ce que l'appareil de montage desdites première et seconde fibres optiques comprend un premier bloc (16a) ayant une cannelure pour monter ladite première fibre, un second bloc (16b) ayant une cannelure pour monter ladite seconde fibre, une bride (68) entourant la surface cannelée dudit second bloc, lesdites cannelures et fibres étant agencées côte à côte et séparées par une distance déterminée par la bride.

9. Transducteur à température tel qu'il est revendiqué dans la revendication 8, caractérisé en outre en ce que lesdits blocs sont soudés ensemble.

10. Transducteur à température tel qu'il est revendiqué dans la revendication 2, caractérisé en ce que ledit détecteur est placé du même côté dudit appareil de montage que ladite source de lumière.

11. Transducteur à température tel qu'il est revendiqué dans la revendication 1 ou 8, caractérisé en ce que lesdites première et seconde fibres optiques sont enroulées autour de l'appreil de montage desdites fibres de façon à ce que lesdites fibres entrent et ressortent d'un seul côté de l'appareil de montage.

12. Transducteur à température tel qu'il est revendiqué dans la revendication 1, ledit appareil de mesure étant caractérisé en outré par:

un miroir (74) réfléchissant l'illumination dans ladite seconde fibre vers ladite seconde fibre;

un coupleur à fibre optique (82) interposé entre ladite source de lumière et ladite première fibre; et

un isolateur optique (77, 78) interposé entre ladite source de lumière et ledit coupleur à fibre optique.

13. Méthode de mesure de la température comprenant les étapes suivantes:

l'enlèvement d'une portion du revêtement du côté de chacune d'une première et seconde fibres optiques monomodes (12a, 12b) de façon à produire une surface de couplage (18a, 18b) sur chaque fibre (12a, 12b);

le montage desdites première et seconde fibres optiques de façon à former un coupleur à fibre optique évanescent (10) par le placement desdites première et seconde fibres optiques côte-à-côte et la juxtaposition desdites surfaces de couplage, une portion de ladite première fibre étant adjacente à un côté de ladite surface de couplage (18a) et lesdites première et seconde fibres s'éloignant en courbe l'une de l'autre de chaque côté des surfaces de couplage, caractérisée par:

le choix d'une matière sensible à la température ayant un indice de réfraction qui change par rapport aux revêtements desdites fibres en réponse à des changements de température dans un domaine de températures désirable pour ladite mesure de la température, de façon à permettre un couplage entre lesdites premières et secondes fibres, ledit couplage variant avec la température, lesdites fibres étant monomodes dans ledit domaine de températures;

l'interposition de ladite matière sensible à la température entre lesdites surfaces de couplage desdites fibres optiques; et

la mesure de l'efficacite de couplage dudit coupleur à fibre optique évanescent de façon à déterminer ladite température.

14. Méthode de mesure de la température, telle qu'elle est définie dans la revendication 13, caractérisée en ce que ladite étape d'interposition consiste à placer une huile à indice correspondant entre lesdites surfaces de couplage.

15. Méthode de mesure de la température, telle qu'elle est définie dans la revendication 13, caractérisée en ce que ledit coupleur à fibre optique fonctionne de telle sorte qu'il couple la lumière entre les première et seconde fibres en un endroit desdits surfaces de couplage intermédiaire entre les extrémités desdites première et seconde fibres; et dans laquelle ladite étape de mesure comprend l'illumination d'une extrémité de ladite première fibre optique et la mesure du signal lumineux de sortie à la fois à l'autre extrémité de ladite première fibre optique et à l'extrémité correspondante de ladite seconde fibre optique.

16. Méthode de mesure de la température, telle qu'elle est définie dans la revendication 15, caractérisée par les étapes de:

détermination du rapport dudit signal de sortie mesuré à ladite extrémité de ladite seconde fibre optique sur la somme dudit signal de sortie mesuré à ladite autre extrémité de ladite première fibre optique et ladite extrémité correspondante de ladite second fibre optique.

17. Méthode de mesure de la température, telle qu'elle est définie dans la revendication 16, caractérisée en ce qus ladite étape d'illumination consiste à fournir une illumination modulée et dans laquelle ladite étape de mesure du signal de sortie comprend l'étape de mesure du signal de sortie maximal de l'illumination à ladite autre extrémité et à ladite extrémité correspondante desdites fibres optiques, et l'intégration dudit signal de sortie maximal afin de réduire la largeur de bande de ladite étape de mesure.

EP 0 074 788 B1

FIG.1

FIG. 2

FIG. 3

FIG. 4

1

63

16a

12a

12b

.64

16a

FIG. 5

68

18b

16b

12b

FIG. 6

2

TEMPERATURE (CELCIUS DEG.)

FIG. 7

COUPLING EFFICIENCY

IMMERSION LIQUID INDEX OF REFRACTION

EP 0 074 788 B1

FIG. 8

FIG. 9

4

FIG.10

EP 0 074 788 B1

FIG. 11